(19) Europäisches Patentamt
European Patent Office
Office européen des brevets

(11) **EP 4 764 456 A1**

(12) **DEMANDE DE BREVET EUROPEEN**

(43) Date de publication:
**24.06.2026 Bulletin 2026/26**

(21) Numéro de dépôt: **25221330.1**

(22) Date de dépôt: **08.12.2025**

(51) Classification Internationale des Brevets (IPC):
**G01N 21/64** (2006.01)   **G01N 21/66** (2006.01)
**G01N 21/84** (2006.01)

(52) Classification Coopérative des Brevets (CPC):
**G01N 21/6489; G01N 21/6456; G01N 21/66;**
G01N 2021/646

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **18.12.2024 FR 2414414**

(71) Demandeur: **Commissariat à l'Energie Atomique
et aux Energies
Alternatives
75015 Paris (FR)**

(72) Inventeurs:
• **WYTTENBACH, Joël
38054 GRENOBLE CEDEX 09 (FR)**
• **NOUEL, Baptiste
38054 GRENOBLE CEDEX 09 (FR)**

(74) Mandataire: **Cabinet Beaumont
4, Place Robert Schuman
B.P. 1529
38025 Grenoble Cedex 1 (FR)**

(54) **PROCEDE D'IMAGERIE SPECTRALE**

(57) La présente description concerne un procédé d'imagerie spectrale d'un objet (20) comprenant la détermination, par simulation en utilisant un modèle semi-physique du spectre du rayonnement de luminescence ($L_{lum}$) émis par l'objet (20), de premières, deuxièmes, et troisièmes valeurs de luminescence simulées du rayonnement de luminescence au travers respectivement d'un premier, deuxième, et troisième filtre optique, de premier et deuxième tableaux contenant respectivement des premières et deuxièmes valeurs de ratio simulées, l'acquisition de première, deuxième, et troisième images de luminescence du rayonnement de luminescence au travers respectivement du premier, deuxième, et troisième filtre optique, la détermination de première et deuxième images de ratio égales au rapport respectivement des première et deuxième images de luminescence et des première et troisième images de luminescence, et la détermination d'une image de la longueur d'onde de coupure $\lambda_g$ de l'objet par comparaison des première et deuxième images de ratio aux premiers et deuxième tableaux.

Fig 1

EP 4 764 456 A1

**Description**

Domaine technique

La présente description concerne de façon générale les procédés d'imagerie spectrale.

Technique antérieure

Un procédé d'imagerie spectrale peut être mis en oeuvre pour déterminer d'éventuels défauts dans le matériau semi-conducteur d'une cellule photovoltaïque.

Il existe des procédés d'imagerie spectrale mettant en oeuvre des méthodes spectroscopiques. Toutefois, ces procédés nécessitent des équipements spécifiques et coûteux et peuvent difficilement être mis en oeuvre à une échelle industrielle.

Résumé de l'invention

Un mode de réalisation pallie tout ou partie des inconvénients des procédés d'imagerie spectrale connus.

Un mode de réalisation prévoit un procédé d'imagerie spectrale d'un objet luminescent mettant en oeuvre un capteur d'images et des premier, deuxième, et troisième filtres optiques, au moins l'un des premier, deuxième, et troisième filtres optiques étant un filtre optique passe-bande, le procédé comprenant les étapes suivantes :

a) déterminer, par simulation en utilisant un modèle semi-physique du spectre $\phi$em du rayonnement de luminescence émis par l'objet, des premières valeurs de luminescence simulées du rayonnement de luminescence émis par l'objet au travers du premier filtre optique sur une première plage d'une longueur d'onde de coupure Ag de l'objet, des deuxièmes valeurs de luminescence simulées du rayonnement de luminescence émis par l'objet au travers du deuxième filtre optique sur la première plage de la longueur d'onde de coupure $\lambda$g, et des troisièmes valeurs de luminescence simulées du rayonnement de luminescence émis par l'objet au travers du troisième filtre optique sur la première plage de la longueur d'onde de coupure $\lambda$g, un premier tableau contenant des premières valeurs de ratio simulées égales aux rapports des premières valeurs de luminescence simulées et des deuxièmes valeurs de luminescence simulées, et un deuxième tableau contenant des deuxièmes valeurs de ratio simulées égales aux rapports des premières valeurs de luminescence simulées et des troisièmes valeurs de luminescence simulées ;
b) acquérir, par le capteur d'images, une première image de luminescence du rayonnement de luminescence émis par l'objet au travers du premier filtre optique ;
c) acquérir, par le capteur d'images, une deuxième image de luminescence du rayonnement de luminescence émis par l'objet au travers du deuxième filtre optique ;
d) acquérir, par le capteur d'images, une troisième image de luminescence du rayonnement de luminescence émis par l'objet au travers du troisième filtre optique ;
e) déterminer une première image de ratio égale au rapport de la première image de luminescence et de la deuxième image de luminescence et une deuxième image de ratio égale au rapport de la première image de luminescence et de la troisième image de luminescence ; et
f) déterminer une image de la longueur d'onde de coupure $\lambda$g par comparaison de la première image de ratio et du premier tableau et de la deuxième image de ratio et du deuxième tableau.

Selon un mode de réalisation, le modèle semi-physique du spectre $\phi$em du rayonnement de luminescence émis par l'objet est selon la relation suivante :

[Math 1]

$$\phi_{em}(\lambda) = EQE_{PV}(\lambda)\,\phi_{bb}(\lambda)\,B$$

où $\lambda$ est la longueur d'onde, EQEPV est l'efficacité quantique externe photovoltaïque de l'objet, $\phi$bb est l'émission du corps noir, et B est un premier facteur multiplicatif, l'efficacité quantique externe photovoltaïque EQEPV étant fonction de la largeur de bande $\lambda$s.

Selon un mode de réalisation, l'efficacité quantique externe photovoltaïque EQEPV de l'objet est modélisée par la relation suivante :

[Math 2]

$$EQE_{PV}(\lambda) = \frac{A_m}{1 + \exp(K(\lambda - \lambda_g)/\lambda_s)}$$

où Am est une constante et K est un deuxième facteur multiplicatif.

Selon un mode de réalisation, à l'étape a), les premières valeurs de luminescence simulées sont en outre déterminées sur une deuxième plage de la largeur de bande $\lambda$s, les deuxièmes valeurs de luminescence simulées sont en outre déterminées sur une deuxième plage de la largeur de bande $\lambda$s, et les troisièmes valeurs de luminescence simulées sont en outre déterminées sur une deuxième plage de la largeur de bande $\lambda$s, le procédé comprenant en outre la détermination d'une image de la largeur de bande $\lambda$s par comparaison de la première image de ratio et du premier tableau et de la deuxième image de ratio et du deuxième tableau.

Selon un mode de réalisation, le spectre du rayonnement SP capté par le capteur d'images est modélisé selon la relation suivante :

[Math 3]

$$SP(\lambda) = \phi_{em}(\lambda)\, QE_{cam}(\lambda)\, FT_{opt}(\lambda)$$

où QEcam est la réponse spectrale du capteur d'images et d'éventuels éléments optiques autres que les premier, deuxième, et troisième filtres optiques, FTopt est la fonction de transfert de l'un des premier, deuxième, et troisième filtres optiques.

Selon un mode de réalisation, l'émission du corps noir $\phi$bb est modélisée par la relation suivante :

[Math 4]

$$\phi_{bb}(\lambda) = \frac{2hc^2}{\lambda^5} \frac{1}{\exp\left(\frac{hc}{\lambda kT}\right) - 1}$$

où h est la constante de Planck, c la vitesse de la lumière, et T est la température absolue.

Selon un mode de réalisation, le procédé comprend en outre, après l'étape d) et avant l'étape e), une étape d'acquisition, par le capteur d'images, d'une quatrième image de luminescence du rayonnement de luminescence émis par l'objet au travers du premier filtre optique et la modification de la deuxième image de luminescence et de la troisième image de luminescence par une interpolation déterminée à partir de la première image de luminescence et de la quatrième image de luminescence.

Selon un mode de réalisation, au moins deux des premier, deuxième, et troisième filtres optiques sont des filtres optiques passe-bande.

Selon un mode de réalisation, chacun des premier, deuxième, et troisième filtres optiques est un filtre optique passe-bande.

Selon un mode de réalisation, le procédé comprend, entre l'étape b) et l'étape c), le remplacement automatique du premier filtre optique par le deuxième filtre optique, et comprend, entre l'étape c) et l'étape d), le remplacement automatique du deuxième filtre optique par le troisième filtre optique.

Selon un mode de réalisation, le procédé comprend l'illumination de l'objet, l'objet émettant le rayonnement de luminescence par photoluminescence.

Selon un mode de réalisation, le procédé comprend l'alimentation électrique de l'objet, l'objet émettant le rayonnement de luminescence par électroluminescence.

Selon un mode de réalisation, l'objet comprend une cellule photovoltaïque.

Selon un mode de réalisation, l'objet comprend une cellule photovoltaïque de type tandem pérovskite sur silicium.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon partielle et schématique, un mode de réalisation d'un système d'imagerie spectrale ;

la figure 2 représente, de façon partielle et schématique, une variante du système d'imagerie spectrale de la figure 1 ;

la figure 3 représente un exemple de spectre de luminescente d'une cellule photovoltaïque ;

la figure 4 représente des courbes d'évolution de l'efficacité quantique externe photovoltaïque en fonction de la longueur d'onde selon un modèle sigmoïde pour différentes largeurs de bande ;

la figure 5 représente un exemple de la forme spectrale du rayonnement capté par un capteur d'images en l'absence de filtre optique ;

la figure 6, la figure 7, et la figure 8 représentent des exemples de formes spectrales du rayonnement capté par un capteur d'images au travers de trois filtres optiques différents ;

la figure 9 est un schéma-bloc illustrant un mode de réalisation d'un procédé d'imagerie spectrale ;

la figure 10 représente des courbes d'évolution de la longueur d'onde de coupure en fonction de la largeur de bande obtenues lors de la mise en oeuvre d'un mode de réalisation d'un procédé d'imagerie spectrale ;

la figure 11 est un schéma-bloc illustrant un autre mode de réalisation d'un procédé d'imagerie spectrale ;

la figure 12 et la figure 13 représentent des images de la longueur d'onde de coupure d'une cellule photovoltaïque obtenues par le mode de réalisation du procédé d'image spectrale décrit respectivement en relation avec la figure 9 et la figure 11 ;

la figure 14, la figure 15, et la figure 16 représentent respectivement une image de luminescence, une image de la longueur d'onde de coupure, et une image de la largeur de bande d'une cellule photovoltaïque ; et

la figure 17, la figure 18, et la figure 19 représentent respectivement une image de luminescence, une image de la longueur d'onde de coupure, et une image de la largeur de bande d'une autre cellule photovoltaïque.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.
Par souci de clarté, seuls les étapes et éléments utiles à la compréhension des modes de réalisation décrits ont été représentés et sont détaillés.
Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.
Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un système d'imagerie spectrale dans une position normale d'utilisation.
Sauf précision contraire, les expressions "environ", "approximativement", "sensiblement", et "de l'ordre de" signifient à 10 % ou à 10° près, de préférence à 5 % ou à 5° près.
La luminescence est une émission de lumière par un objet qui résulte d'interactions entre particules électriquement chargées. Dans le cas de la photoluminescence, l'émission de lumière par l'objet se produit suite à l'absorption de photons par l'objet. Dans le cas de l'électroluminescence, l'émission de lumière par l'objet se produit en réponse à un courant électrique qui traverse l'objet, ou à un champ électrique qui est appliqué à l'objet.

Une cellule photovoltaïque comprend un empilement de couches dont au moins des couches semi-conductrices et susceptible d'émettre de la lumière par photoluminescence ou électroluminescence.

Des modes de réalisation de systèmes d'imagerie spectrale et de procédés d'imagerie spectrale vont être décrits pour la détection de défauts d'une cellule photovoltaïque. Toutefois, il est clair que ces modes de réalisation des procédés d'imagerie spectrale peuvent être mis en oeuvre pour tout objet présentant un spectre de luminescence, par exemple un pixel d'affichage à diode électroluminescente d'un écran d'affichage.

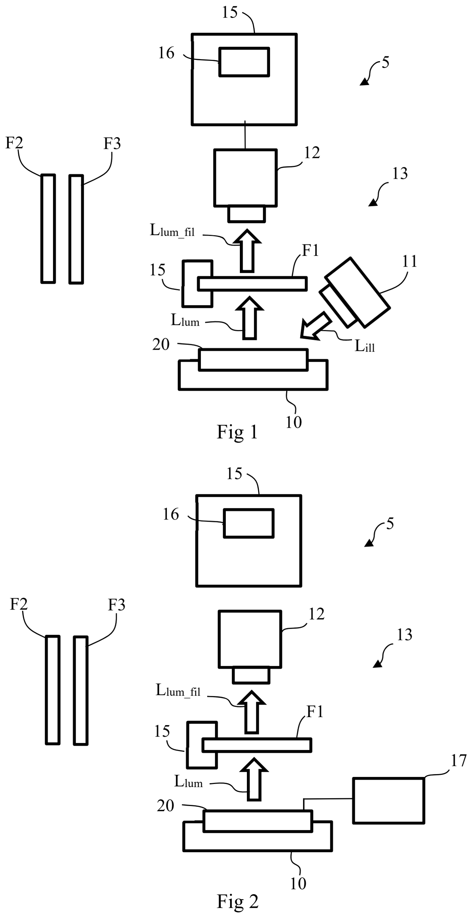

La figure 1 représente, de façon partielle et schématique, un mode de réalisation d'un système d'imagerie spectrale 5 d'une cellule photovoltaïque 20.

Le système d'imagerie spectrale 5 comprend :

- un support 10 de la cellule photovoltaïque 20 ;
- une source d'illumination 11 de la cellule photovoltaïque 20 configurée pour projeter un rayonnement électro-magnétique $L_{ill}$ sur la cellule photovoltaïque 20, la cellule photovoltaïque 20 émettant un rayonnement électro-magnétique $L_{lum}$ par photoluminescence lorsqu'elle est illuminée par le rayonnement $L_{ill}$ ;
- un système d'acquisition d'images 12, également appelé capteur d'images ;
- un système optique 13 comprenant un filtre optique, le filtre F1 en figure 1, parmi trois filtres optiques F1, F2, F3, interposé entre la cellule photovoltaïque 20 et le capteur d'images 12, le capteur d'images 12 étant configuré pour faire l'acquisition d'images d'un rayonnement $L_{lum\_fil}$ qui correspond au rayonnement $L_{lum}$ émis par la cellule photovoltaïque 20 et filtré par le système optique 13 ;
- un dispositif de maintien 15 du système optique 13 entre la cellule photovoltaïque 20 et le capteur d'images 12, pour que les positions relatives entre la cellule photovoltaïque 20, le capteur d'images 12, et le filtre optique F1, F2 ou F3 interposé entre la cellule photovoltaïque 20 et le capteur d'images 12 soient fixes ; et
- un dispositif de traitement 15 relié au capteur d'images 12, le dispositif de traitement 15 comprenant notamment une mémoire 16.

Le système d'imagerie spectrale 5 peut comprendre d'autres éléments optiques, comme des atténuateurs. Le système d'imagerie spectrale 5 peut comprendre un dispositif de changement automatique de filtres optiques parmi les trois filtres optiques F1, F2, F3.

Le spectre du rayonnement d'illumination $L_{ill}$ est différent du spectre du rayonnement $L_{lum}$ de luminescence. La source d'illumination 11 peut comprendre une diode électroluminescente, ou un ensemble de diodes électroluminescentes, ou une source laser. Le capteur d'images 12 est sensible au spectre du rayonnement $L_{lum}$ de luminescence. Le système d'imagerie spectrale 5 peut en outre comprendre un voltmètre, non représenté, pour mesurer la tension apparaissant aux bornes de la cellule photovoltaïque pendant la luminescence. Le système d'imagerie spectrale 5 peut en outre comprendre un capot opaque entourant l'objet 20, la source d'illumination 11, le capteur d'images 12, et le système optique 13 pour éviter toute perturbation due à la lumière ambiante. A titre de variante, le système d'imagerie spectrale 5 peut comprendre au moins deux source d'illumination 11 émettant le même rayonnement d'illumination $L_{ill}$, par exemple disposées de part et d'autre de la cellule photovoltaïque 20.

Selon un mode de réalisation, l'axe optique du capteur d'images 12 est orthogonale par rapport à la face de la cellule photovoltaïque 20 dont des images sont acquises. Le rayonnement d'illumination $L_{ill}$ est par exemple projeté avec un angle d'inclinaison par rapport à l'axe optique du capteur d'images 12 d'environ 45 °.

La figure 2 représente, de façon partielle et schématique, une variante du système d'imagerie spectrale 5 de la figure 1. Le système d'imagerie spectrale 5 représenté en figure 2 comprend l'ensemble des éléments du système d'imagerie spectrale 5 représenté en figure 1 à la différence que la source d'illumination 11 est remplacée par une source électrique 17 reliée à la cellule photovoltaïque 20, la cellule photovoltaïque 20 émettant le rayonnement $L_{lum}$ par électroluminescence lorsqu'elle est alimentée par la source électrique 17.

Le capteur d'images 12 est configuré pour acquérir des images de la cellule photovoltaïque 20, par exemple de la face de la cellule photovoltaïque émettant le rayonnement $L_{lum}$. Chaque image comprend une matrice de pixels d'image. Le capteur d'images 12 comprend une matrice de photodétecteurs fournissant chacun un signal dont l'amplitude dépend de l'énergie lumineuse reçu par le photodétecteur pendant une phase d'intégration. Chaque signal correspond par exemple à un pixel d'image et l'ensemble des pixels d'image forme une image.

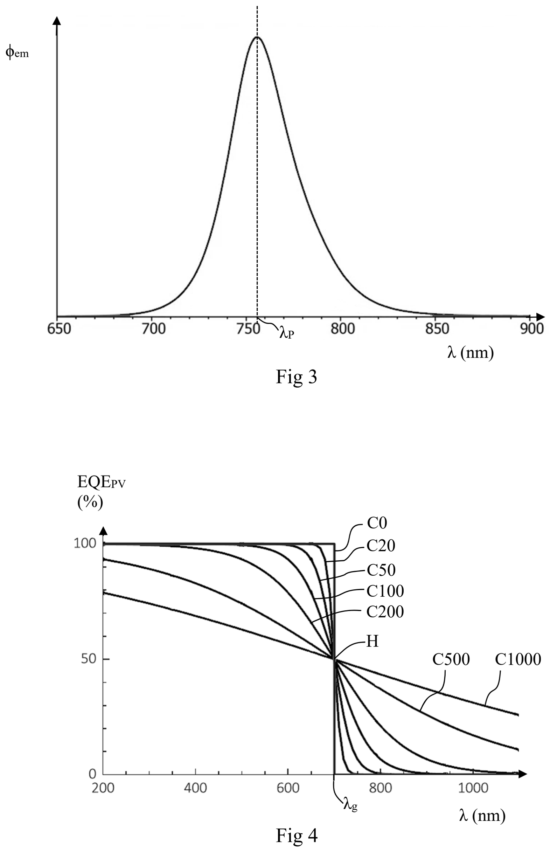

La figure 3 est un exemple d'une courbe d'évolution du spectre de luminescence $\phi_{em}$ d'une cellule photo-voltaïque à simple jonction en fonction de la longueur d'onde $\lambda$.

Le spectre de luminescence $\phi_{em}$ dépend des caractéristiques électroniques du matériau semi-conducteur composant la cellule photovoltaïque 20. Sous certaines conditions, le spectre de luminescence $\phi_{em}$ n'est pas lié au spectre du rayonnement d'illumination $L_{ill}$ dans le cas de la photoluminescence ou à l'alimentation électrique de la cellule photovoltaïque 20 dans le cas de l'électroluminescence. Pour une cellule photovoltaïque à simple jonction, le spectre de luminescence $\phi_{em}$ comprend un pic à une longueur d'onde de pic $\lambda_P$. Dans le cas de la photoluminescence, le rayonnement d'illumination $L_{ill}$ comprend de préférence des longueurs d'onde inférieures à la longueur d'onde de pic

$\lambda_P$. Dans le cas de l'électroluminescente, la tension appliquée à la cellule photovoltaïque 20 est supérieure à un seuil de tension pour déclencher l'électroluminescence.

Selon un mode de réalisation, le spectre de luminescence $\phi_{em}$ émis par la cellule photovoltaïque 20 est modélisé en fonction de la longueur d'onde $\lambda$ du rayonnement $L_{lum}$ par la relation (1) suivante :

[Math 5]

$$\phi_{em}(\lambda) = EQE_{PV}(\lambda)\,\phi_{bb}(\lambda)\,B$$

où $EQE_{PV}(\lambda)$ est l'efficacité quantique externe photovoltaïque, sans unité, $\phi_{bb}(A)$ est la luminance énergétique du corps noir, exprimée en $Wm^{-3}sr^{-1}$, et B est un facteur multiplicatif.

Le facteur multiplicatif B peut être donné par la relation (2) suivante :

[Math 6]

$$B = \exp\left(\frac{qV}{kT}\right) - 1$$

où q est la charge électrique élémentaire (exprimée en coulomb), V est la tension (exprimée en volt) aux bornes du matériau semi-conducteur composant la cellule photovoltaïque, k est la constante de Boltzmann (exprimée en joule par kelvin), et T est la température absolue (exprimée en kelvin).

L'émission du corps noir $\phi_{bb}(\lambda)$ est modélisée par la loi de Planck selon la relation (3) suivante :

[Math 7]

$$\phi_{bb}(\lambda) = \frac{2hc^2}{\lambda^5}\frac{1}{\exp\left(\frac{hc}{\lambda kT}\right) - 1}$$

où h est la constante de Planck et c la vitesse de la lumière.

L'efficacité quantique externe photovoltaïque $EQE_{PV}$ est modélisée par une fonction sigmoïde selon la relation (4) suivante :

[Math 8]

$$EQE_{PV}(\lambda) = \frac{A_m}{1 + \exp\left(K(\lambda - \lambda_g)/\lambda_s\right)}$$

où $A_m$ est une constante, $\lambda_g$ est la longueur d'onde de coupure, $\lambda_s$ est une expression de la largeur de bande, appelée largeur de bande par la suite, et K est un facteur multiplicatif. La longueur d'onde de coupure $\lambda_g$ est proche de la longueur d'onde de pic $\lambda_P$ mais n'est pas identique à la longueur d'onde de pic $\lambda_P$.

Le facteur multiplicatif K est donné par la relation (5) suivante :

[Math 9]

$$K = \ln\left[7 + 4\sqrt{3}\right]$$

La figure 4 représente des courbes d'évolution pour le modèle sigmoïde de l'efficacité quantique externe photovoltaïque $EQE_{PV}$ en fonction de la longueur d'onde $\lambda$ pour différentes valeurs de la largeur de bande $\lambda_s$. La courbe C0

a la forme d'un échelon à la longueur d'onde de coupure $\lambda_g$ et est obtenue pour une largeur de bande $\lambda_s$ tendant vers 0. Les courbes C20, C50, C100, C200, C500 et C1000 sont obtenues respectivement pour une largeur de bande $\lambda_s$ égale à 20 nm, 50 nm, 100 nm, 200 nm, 500 nm et 1000 nm. Les courbes C20, C50, C100, C200, C500 et C1000 passent toutes par le point H dont l'abscisse est égale à $\lambda_q$ et l'ordonnée est égale à 50 %.

Si on exprime le spectre de luminescence $\phi_{em}$ en fonction de la longueur d'onde $\lambda$, l'étude à proximité de la longueur d'onde de coupure $\lambda_q$ montre que l'efficacité quantique externe photovoltaïque $EQE_{PV}$ est une fonction décroissante par rapport à la longueur d'onde $\lambda$ et l'émission du corps noir $\phi_{bb}$ est une fonction croissante par rapport à la longueur d'onde $\lambda$. C'est la multiplication de ces deux effets qui crée la forme du pic de luminescence du spectre de luminescence $\phi_{em}$.

Le spectre de luminescence $\phi_{em}$ est donc complètement modélisé, à un facteur multiplicatif près, au moyen de deux paramètres, la longueur d'onde de coupure $\lambda_g$ et la largeur de bande $\lambda_s$.

Avec le système optique 13 et le capteur d'images 12, le spectre SP du signal capté par le capteur d'images 12 correspond au spectre de luminescence $\phi_{em}$ multiplié par des termes additionnels reflétant les sensibilités spectrales du système optique 13 et du capteur d'images 12.

La forme spectrale SP du rayonnement capté par le capteur d'images 12 est modélisé par la relation (6) suivante :

[Math 10]

$$SP(\lambda) = \phi_{em}(\lambda)\, QE_{cam}(\lambda)\, FT_{opt}(\lambda)$$

où $QE_{cam}$ est la réponse spectrale (également appelée efficacité quantique) du capteur d'images 12 et $FT_{opt}$ est la fonction de transfert du système optique 13. La réponse spectrale $QE_{cam}$ et la fonction de transfert $FT_{opt}$ du système optique 13 sont connues et fournies généralement par les fabricants du capteur d'images 12 et du système optique 13.

Le filtre optique F1 a une fonction de transfert $FT_{F1}$, le filtre optique F2 a une fonction de transfert $FT_{F2}$, et le filtre optique F3 a une fonction de transfert $FT_{F3}$. La fonction de transfert $FT_{opt}$ du système optique 13 correspond à la fonction de transfert $FT_{F1}$, $FT_{F2}$, ou $FT_{F3}$ du filtre optique F1, F2, ou F3 interposé entre la cellule photovoltaïque 20 et le capteur d'images 12.

Lorsque le système d'imagerie spectrale 5 peut comprendre d'autres éléments optiques, comme des atténuateurs, la réponse spectrale des ces éléments optiques peut être incluse dans le terme $QE_{cam}$ ou peut correspondre à un terme supplémentaire ajouté dans la relation (6).

Selon un mode de réalisation, au moins l'un des filtres optiques parmi les filtres optiques F1, F2, et F3 est un filtre optique passe-bande, chacun des autres filtres optiques parmi les filtres optiques F1, F2, et F3 étant un filtre optique passe-bande, un filtre optique passe-bas, ou un filtre optique passe-haut. Le filtre optique F1 a une bande passante $\Delta F1$, le filtre optique F2 a une bande passante $\Delta F2$, et le filtre optique F3 a une bande passante $\Delta F3$, sachant que, pour un filtre passe-bas, la borne inférieure de la bande passante est 0 Hz et que, pour un filtre passe-haut, la borne supérieure de la bande passante est $+\infty$. Selon un mode de réalisation, la sélection des bandes passantes des filtres optiques F1, F2, et F3 est adaptée notamment au fait que la cellule photovoltaïque 20 analysée est à jonction simple ou à multi-jonction. Selon un mode de réalisation, chaque bande passante $\Delta F1$, $\Delta F2$, $\Delta F3$ est supérieure à 20 nm, notamment supérieure à 30 nm, en particulier égal à 50 nm. Selon un mode de réalisation, le recouvrement entre deux bandes passantes de deux filtres optiques parmi les filtres optiques F1, F2, et F3 est inférieur à 50 nm, notamment inférieur à 40 nm. Selon un mode de réalisation, au moins deux des filtres optiques parmi les filtres optiques F1, F2, et F3 sont chacun un filtre optique passe-bande, l'autre filtre optique parmi les filtres optiques F1, F2, et F3 étant un filtre optique passe-bande, un filtre optique passe-bas, ou un filtre optique passe-haut. Selon un mode de réalisation, chaque filtre optique F1, F2, F3 est un filtre optique passe-bande. Dans ce cas, le premier filtre optique F1 est centré sur une longueur d'onde centrale $\lambda F1$, le deuxième filtre optique F2 est centré sur une longueur d'onde centrale $\lambda F2$, et le troisième filtre optique F3 est centré sur une longueur d'onde centrale $\lambda F3$. L'écart entre chaque longueur d'onde centrale parmi les longueurs d'onde centrales $\lambda F1$, $\lambda F2$, $\lambda F3$, et au moins l'une des deux autres longueurs d'onde centrales parmi les longueurs d'onde centrales $\lambda F1$, $\lambda F2$, $\lambda F3$ est supérieur à 10 nm, de préférence supérieur à 20 nm, en particulier égal à 25 nm. Les longueurs d'onde centrales $\lambda F1$, $\lambda F2$, $\lambda F3$ sont choisies en fonction de la longueur d'onde de pic $\lambda_P$ attendue pour la cellule photovoltaïque 20.

Selon un mode de réalisation, dans le cas du pour système d'imagerie spectrale 5 de la figure 1, chaque filtre optique F1, F2, F3 est en outre configuré pour bloquer le rayonnement d'illumination $L_{ill}$. A titre de variante, le système d'imagerie spectrale 5 de la figure 1 peut en outre comprendre un filtre optique adapté à bloquer le rayonnement d'illumination $L_{ill}$ et disposé en amont du capteur d'images 12.

Selon un mode de réalisation, la cellule photovoltaïque 20 est une cellule multi-jonction. C'est le cas notamment d'une cellule de type tandem qui se subdivise en deux sous-cellules. Dans ce cas, le spectre de luminescence $\phi_{em}$ peut

comprendre deux pics. Les longueurs d'onde centrales λF1, λF2, λF3 et les bandes passantes ΔF1, ΔF2, ΔF3 sont choisies en fonction de la longueur d'onde de pic $\lambda_P$ du pic d'intérêt de la cellule photovoltaïque 20, en particulier pour ne pas recouvrir un autre pic.

Selon un mode de réalisation, la cellule photovoltaïque 20 est une cellule multi-jonction. C'est le cas notamment d'une cellule de type tandem. Dans ce cas, le spectre de luminescence $\phi_{em}$ peut comprendre deux pics. Les longueurs d'onde centrales λF1, λF2, λF3 et les bandes passantes ΔF1, ΔF2, ΔF3 sont choisies en fonction de la longueur d'onde de pic $\lambda_P$ du pic d'intérêt de la cellule photovoltaïque 20, en particulier pour ne pas recouvrir un autre pic.

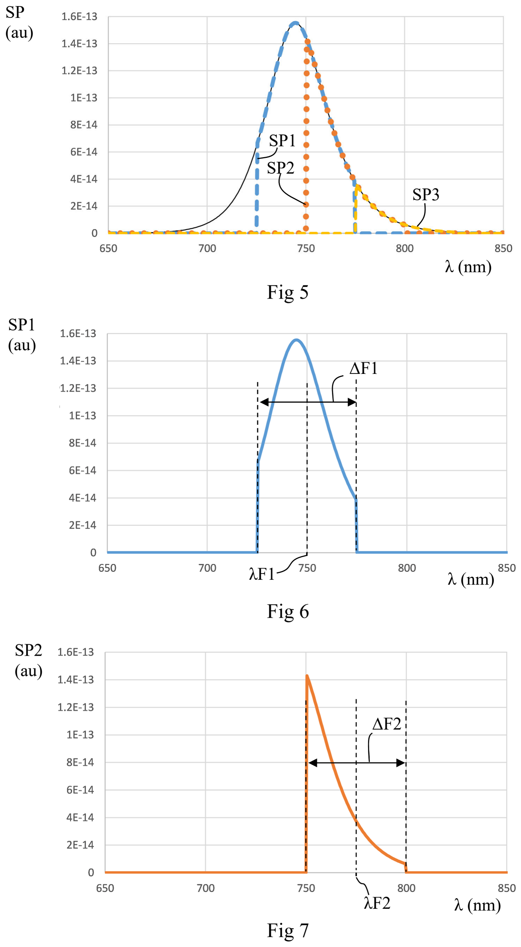

La figure 5 représente un exemple de la forme spectrale SP du rayonnement capté par le capteur d'images 12 en l'absence de filtre optique et la figure 6, la figure 7, et la figure 8 représentent des exemples de formes spectrales SP1, SP2, SP3 du rayonnement capté par le capteur d'images 12 respectivement lorsque le premier filtre optique F1 (courbe SP1), le deuxième filtre optique F2 (courbe SP2) ou le troisième filtre optique F3 (courbe SP3) est interposé entre la cellule photovoltaïque 20 et le capteur d'images 12 et dans le cas où les filtres optiques F1, F2, F3 sont des filtres optiques passe-bande parfaits.

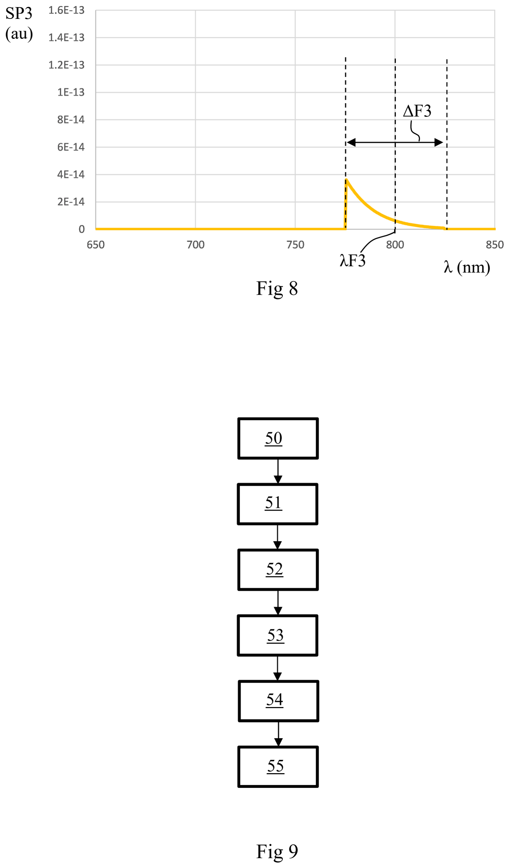

Un filtre optique passe-bande parfait a un gain de transmission égal à 1 dans sa bande passante et un gain de transmission égal à 0 en dehors de la bande passante. Sur la figure 5, on a superposé la forme spectrale SP1 en traits tiretés, la forme spectrale SP2 en pointillés, et la forme spectrale SP3 en traits tiretés sur la forme spectrale SP. Pour la figure 6, le filtre optique F1 est un filtre optique passe-bande centré sur la longueur d'onde centrale λF1 égale à 750 nm avec une bande passante ΔF1 égale à 50 nm. Pour la figure 7, le filtre optique F2 est un filtre optique passe-bande centré sur la longueur d'onde centrale λF2 égale à 775 nm avec une bande passante ΔF2 égale à 50 nm. Pour la figure 8, le filtre optique F3 est un filtre optique passe-bande centré sur la longueur d'onde centrale λF3 égale à 800 nm avec une bande passante ΔF3 égale à 50 nm.

La luminosité de chaque pixel de l'image captée par le capteur d'images 12 au travers chaque filtre optique peut s'interpréter comme une intégrale partielle de la forme spectrale SP sur un domaine de longueur d'onde donné par la bande passante du filtre optique utilisé.

Il est déterminé un premier ratio $R_{F1/F2}$ selon la relation (7) suivante :

[Math 11]

$$R_{F1/F2} = \frac{\int_{\lambda F1 - \Delta F1/2}^{\lambda F1 + \Delta F1/2} \phi_{bb} \cdot EQE_{PV} \cdot QE_{cam} \cdot d\lambda}{\int_{\lambda F2 + \Delta F2/2}^{\lambda F2 + \Delta F2/2} \phi_{bb} \cdot EQE_{PV} \cdot QE_{cam} \cdot d\lambda}$$

Ceci correspond au rapport entre l'aire sous la courbe de la figure 6 et l'aire sous la courbe de figure 7.

Il est déterminé un deuxième ratio $R_{F1/F3}$ selon la relation (8) suivante :

[Math 12]

$$R_{F1/F3} = \frac{\int_{\lambda F1 - \Delta F1/2}^{\lambda F1 + \Delta F1/2} \phi_{bb} \cdot EQE_{PV} \cdot QE_{cam} \cdot d\lambda}{\int_{\lambda F3 - \Delta F3/2}^{\lambda F3 + \Delta F3/2} \phi_{bb} \cdot EQE_{PV} \cdot QE_{cam} \cdot d\lambda}$$

Ceci correspond au rapport entre l'aire sous la courbe de la figure 6 et l'aire sous la courbe de figure 8.

Le deuxième ratio $R_{F1/F3}$ peut être remplacé par le ratio $R_{F2/F3}$. Dans la suite de la description, il est donc possible de remplacer le ratio $R_{F1/F3}$ par le ratio $R_{F2/F3}$. De la même façon, les ratios inverses peuvent également être utilisés en lieu et place de ceux présentés dans cette description.

Dans chaque ratio $R_{F1/F2}$ et $R_{F1/F3}$, la constante $A_m$ dans l'expression de l'efficacité quantique externe photovoltaïque $EQE_{PV}$ et la constante B dans l'expression du spectre de luminescence $\phi_{em}$, qui ne dépendent pas de la longueur d'onde et qui sont présentes au numérateur et au dénominateur, se simplifient. Cette simplification ne peut être effectuée que dans le cas où le rayonnement $L_{lum}$ est stable dans le temps. Dans le cas où le rayonnement $L_{lum}$ varie dans le temps, une correction décrite par la suite doit être réalisée pour tenir compte de la variation du rayonnement $L_{lum}$ et pouvoir effectuée la simplification.

En pratique, comme les filtres optiques F1, F2, et F3 ne sont pas parfaits, le premier ratio $R_{F1/F2}$ est déterminé selon la relation (9) suivante :

[Math 13]

$$R_{F1/F2} = \frac{\int_0^\infty FT_{F1} \cdot \phi_{bb} \cdot EQE_{PV} \cdot QE_{cam} \cdot d\lambda}{\int_0^\infty FT_{F2} \cdot \phi_{bb} \cdot EQE_{PV} \cdot QE_{cam} \cdot d\lambda}$$

Le premier ratio $R_{F1/F2}$ correspond à une première fonction $f1(\lambda_g, \lambda_s)$ qui dépend de la longueur d'onde de coupure $\lambda_q$ et de la largeur de bande $\lambda_s$.

De façon analogue, le deuxième ratio $R_{F1/F3}$ est déterminé par la relation (10) suivante :

[Math 14]

$$R_{F1/F3} = \frac{\int_0^\infty FT_{F1} \cdot \phi_{bb} \cdot EQE_{PV} \cdot QE_{cam} \cdot d\lambda}{\int_0^\infty FT_{F3} \cdot \phi_{bb} \cdot EQE_{PV} \cdot QE_{cam} \cdot d\lambda}$$

Le deuxième ratio $R_{F1/F3}$ correspond à une deuxième fonction $f2(\lambda_g, \lambda_s)$ qui dépend de la longueur d'onde de coupure $\lambda_g$ et de la largeur de bande $\lambda_s$.

La figure 9 est un schéma-bloc illustrant un mode de réalisation d'un procédé d'imagerie spectrale d'une cellule photovoltaïque 20 mettant en oeuvre le système d'imagerie spectrale 5 de la figure 1 ou 2.

A l'étape 50, il est déterminé un premier tableau T1 contenant des valeurs obtenues par simulation du premier ratio $R_{F1/F2}$ déterminées à partir des équations décrites précédemment sur une plage de valeurs de la longueur d'onde de coupure $\lambda_g$ et une plage de valeurs de la largeur de bande $\lambda_s$ et un deuxième tableau T2 contenant des valeurs obtenues par simulation du deuxième ratio $R_{F1/F3}$ déterminées à partir des équations décrites précédemment sur une plage de valeurs de la longueur d'onde de coupure $\lambda_g$ et une plage de valeurs de la largeur de bande $\lambda_s$. Les équations qui sont utilisées sont déterminées en fonction des matériaux prévus pour la cellule photovoltaïque 20. A titre d'exemple, pour chacun des tableaux T1 et T2, les valeurs du ratio $R_{F1/F2}$ et $R_{F1/F3}$ sont déterminées pour la longueur d'onde de coupure $\lambda_q$ dans une première plage allant de 720 nm à 830 nm avec un incrément inférieur à 2 nm, de préférence inférieur ou égal à 1 nm, et pour la largeur de bande $\lambda_s$ dans une deuxième plage allant de de 12 nm à 30 nm avec un incrément inférieur à 1 nm, de préférence inférieur ou égal à 0,2 nm. Les tableaux T1 et T2 sont stockés dans la mémoire 16.

Selon un mode de réalisation, pour obtenir les tableaux T1 et T2, il est déterminé par simulation des premières valeurs de la forme spectrale SP1 du rayonnement capté par le capteur d'images 12 lorsque le premier filtre optique F1 est interposé entre la cellule photovoltaïque 20 sur la première plage de la longueur d'onde de coupure $\lambda_g$ et la deuxième plage de la largeur de bande $\lambda_s$. Il est en outre déterminé par simulation des deuxièmes valeurs de la forme spectrale SP2 du rayonnement capté par le capteur d'images 12 lorsque le deuxième filtre optique F2 est interposé entre la cellule photovoltaïque 20 sur la première plage de la longueur d'onde de coupure $\lambda_g$ et la deuxième plage de la largeur de bande $\lambda_s$. Enfin, il est déterminé par simulation des troisièmes valeurs de la forme spectrale SP3 du rayonnement capté par le capteur d'images 12 lorsque le troisième filtre optique F3 est interposé entre la cellule photovoltaïque 20 sur la première plage de la longueur d'onde de coupure $\lambda_g$ et la deuxième plage de la largeur de bande $\lambda_s$. Le premier tableau T1 est obtenu en faisant le rapport, pour chaque couple de longueur d'onde de coupure $\lambda_g$ et de la largeur de bande $\lambda_s$, de la première valeur et de la deuxième valeur obtenues pour le même couple et le deuxième tableau T2 est obtenu en faisant le rapport, pour chaque couple de longueur d'onde de coupure $\lambda_g$ et de la largeur de bande $\lambda_s$, de la première valeur et de la troisième valeur obtenues pour le même couple. Le procédé se poursuit à l'étape 51.

A l'étape 51, le premier filtre optique F1 est disposé entre la cellule photovoltaïque 20 et le capteur d'images 12. La cellule photovoltaïque 20 est illuminée par le rayonnement $L_{lum}$ pour le système d'imagerie spectrale 5 de la figure 1 ou alimentée électriquement pour le système d'imagerie spectrale 5 de la figure 2, et une première image ImF1 de la cellule photovoltaïque 20 est acquise par le capteur d'images 12 au travers du premier filtre optique F1. L'image ImF1 acquise est transmise au dispositif de traitement 15 et stockée dans la mémoire 16. Le procédé comprend en outre une étape d'acquisition d'une image ImF1' de la cellule photovoltaïque 20 par le capteur d'images 12 avec interposition du premier filtre optique F1 en l'absence de luminescence. L'image ImF1' acquise est transmise au dispositif de traitement 15 et stockée dans la mémoire 16. Le dispositif de traitement 15 détermine une nouvelle image ImF1" égale à la différence entre l'image ImF1 et l'image ImF1'. Ceci permet de façon avantageuse de soustraire au moins une partie du bruit de mesure de l'image ImF1. Le procédé se poursuit à l'étape 52.

A l'étape 52, le premier filtre optique F1 est retiré et le deuxième filtre optique F2 est disposé entre la cellule photovoltaïque 20 et le capteur d'images 12. La cellule photovoltaïque 20 est illuminée par le rayonnement $L_{lum}$ pour le système d'imagerie spectrale 5 de la figure 1 ou alimentée électriquement pour le système d'imagerie spectrale 5 de la figure 2 et une deuxième image ImF2 de la cellule photovoltaïque 20 est acquise par le capteur d'images 12 au travers du deuxième filtre optique F2. L'image ImF2 acquise est transmise au dispositif de traitement 15 et stockée dans la mémoire 16. Le procédé comprend en outre une étape d'acquisition d'une image ImF2' de la cellule photovoltaïque 20 par le capteur d'images 12 avec interposition du deuxième filtre optique F2 en l'absence de luminescence. L'image ImF2' acquise est transmise au dispositif de traitement 15 et stockée dans la mémoire 16. Le dispositif de traitement 15 détermine une nouvelle image ImF2" égale à la différence entre l'image ImF2 et l'image ImF2'. Ceci permet de façon avantageuse de soustraire au moins une partie du bruit de mesure de l'image ImF2. A titre de variante, lorsque le bruit est essentiellement de nature électronique, le dispositif de traitement 15 détermine la nouvelle image ImF2" égale à la différence entre l'image ImF2 et l'image ImF1' déterminée à l'étape 51. Le procédé se poursuit à l'étape 53.

A l'étape 53, le deuxième filtre optique F2 est retiré et le troisième filtre optique F3 est disposé entre la cellule photovoltaïque 20 et le capteur d'images 12. La cellule photovoltaïque 20 est illuminée par le rayonnement $L_{lum}$ pour le système d'imagerie spectrale 5 de la figure 1 ou alimentée électriquement pour le système d'imagerie spectrale 5 de la figure 2 et une troisième image ImF3 de la cellule photovoltaïque 20 est acquise par le capteur d'images 12 au travers du troisième filtre optique F3. L'image ImF3 acquise est transmise au dispositif de traitement 15 et stockée dans la mémoire 16. Le procédé comprend en outre une étape d'acquisition d'une image ImF3' de la cellule photovoltaïque 20 par le capteur d'images 12 avec interposition du troisième filtre optique F3 en l'absence de luminescence. L'image ImF3' acquise est transmise au dispositif de traitement 15 et stockée dans la mémoire 16. Le dispositif de traitement 15 détermine une nouvelle image ImF3" égale à la différence entre l'image ImF3 et l'image ImF3'. Ceci permet de façon avantageuse de soustraire au moins une partie du bruit de mesure de l'image ImF3. A titre de variante, lorsque le bruit est essentiellement de nature électronique, le dispositif de traitement 15 détermine la nouvelle image ImF3" égale à la différence entre l'image ImF3 et l'image ImF1' déterminée à l'étape 51. Le procédé se poursuit à l'étape 54.

A l'étape 54, la valeur du premier ratio $R_{F1/F2}$ est déterminée pour chaque pixel d'image à une position donnée à partir du pixel d'image à la position donnée de la première image ImF1 et du pixel d'image à la position donnée de la deuxième image ImF2 et la valeur du deuxième ratio $R_{F1/F3}$ est déterminé pour chaque pixel d'image à une position donnée à partir du pixel d'image à la position donnée de la première image ImF1 et du pixel d'image à la position donnée de la troisième image ImF3. Selon un mode de réalisation, le premier ratio $R_{F1/F2}$ pour chaque pixel d'image à une position donnée est égal au rapport entre le pixel d'image à la position donnée de la première image ImF1 et le pixel d'image à la position donnée de la deuxième image ImF2 et le deuxième ratio $R_{F1/F3}$ pour chaque pixel d'image à une position donnée est égal au rapport du pixel d'image à la position donnée de la première image ImF1 et du pixel d'image à la position donnée de la troisième image ImF2. Le procédé se poursuit à l'étape 55.

A l'étape 55, pour chaque pixel d'image, le ratio $R_{F1/F2}$ déterminé à l'étape 54 est comparé aux valeurs du premier tableau T1. A partir du premier tableau T1, il est déterminé, pour chaque pixel d'image, une première fonction $\lambda_g=L1(\lambda_s)$ pour laquelle le ratio $R_{F1/F2}$ du premier tableau T1, correspond au moins approximativement à la valeur du ratio $R_{F1/F2}$ déterminée à l'étape 54. Selon un mode de réalisation, pour chaque valeur de la longueur d'onde de coupure $\lambda_g$ pour laquelle un ratio $R_{F1/F2}$ simulé est stocké dans le premier tableau T1, il est sélectionné la valeur de la largeur de bande $\lambda_s$ pour laquelle le ratio $R_{F1/F2}$ simulé stocké dans le premier tableau T1 est la plus proche du ratio $R_{F1/F2}$ déterminée à l'étape 54. Pour chaque pixel d'image, le ratio $R_{F1/F3}$ déterminé à l'étape 54 est comparé aux valeurs du deuxième tableau T2. A partir du deuxième tableau T2, il est déterminé pour chaque pixel d'image une deuxième fonction $\lambda_g=L2(\lambda_s)$ pour laquelle le ratio $R_{F1/F3}$ du deuxième tableau T2, correspond au moins approximativement à la valeur du ratio $R_{F1/F3}$ déterminée à l'étape 54. Selon un mode de réalisation, pour chaque valeur de la longueur d'onde de coupure $\lambda_g$ pour laquelle un ratio $R_{F1/F3}$ simulé est stocké dans le deuxième tableau T2, il est sélectionné la valeur de la largeur de bande $\lambda_s$ pour laquelle le ratio $R_{F1/F2}$ simulé stocké dans le deuxième tableau T2 est la plus proche du ratio $R_{F1/F3}$ déterminée à l'étape 54.

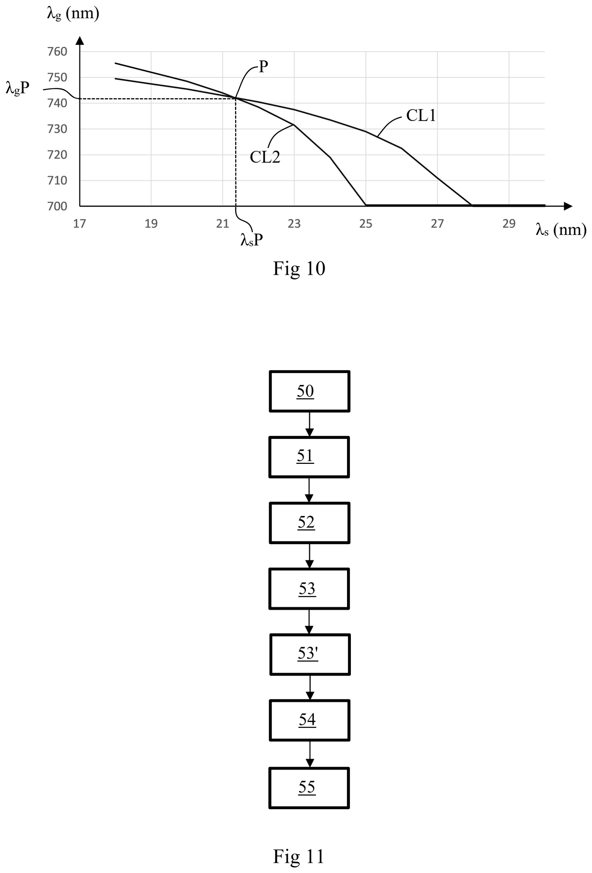

La figure 10 représente une courbe d'évolution CL1 de la fonction $\lambda_g=L1(\lambda_s)$ et une courbe d'évolution CL2 de la fonction $\lambda_g=L2(\lambda_s)$ pour un pixel d'image. L'abscisse $\lambda_sP$ et l'ordonnée $\lambda_gP$ du point P d'intersection des deux courbes CL1 et CL2 correspondent aux valeurs respectivement de la largeur de bande et de la longueur d'onde de coupure pour le pixel d'image.

Selon un mode de réalisation, un code couleur ou un code de niveau de gris est attribué pour les valeurs de la longueur d'onde de coupure $\lambda_g$ et un code couleur ou un code de niveau de gris est attribué pour les valeurs de la largeur de bande $\lambda_s$. Selon un mode de réalisation, le dispositif de traitement 14 détermine une image Im_$\lambda_g$ en couleur ou en niveaux de gris dont chaque pixel d'image représente la valeur $\lambda_gP$ déterminée pour ce pixel d'image et une image Im _$\lambda_s$ en couleur ou en niveaux de gris dont chaque pixel d'image représente la valeur $\lambda_sP$ déterminée pour ce pixel d'image.

Selon un mode de réalisation, le changement de filtres optiques F1, F2, F3 peut être réalisé manuellement par un opérateur. Selon un mode de réalisation, le changement de filtres optiques F1, F2, F3 peut être réalisé de façon automatisée.

Le procédé d'imagerie spectrale permet de façon avantageuse d'obtenir deux données spectrales $\lambda_g$ et $\lambda_s$ du matériau semi-conducteur, en ayant recours à seulement trois filtres optiques et un système d'acquisition d'images en luminescence 12 sans capacité spectrale.

L'utilisation d'un modèle semi-physique pour représenter le spectre de luminescence $\phi_{em}$, qui utilise un modèle physique pour l'émission du corps noir $\phi_{bb}(\lambda)$ et une représentation sigmoïde de l'efficacité quantique externe $EQE_{PV}$, permet d'obtenir une modélisation meilleure que celle qui est obtenue dans le cas où le spectre de luminescence $\phi_{em}$ est modélisé par une courbe purement mathématique comme une gaussienne. Les ratios $R_{F1/F2}$ simulés du premier tableau T1 et les ratios $R_{F1/F3}$ simulés du deuxième tableau T2 peuvent dont être déterminés avec une précision meilleure que celle qui est obtenue dans le cas où le spectre de luminescence $\phi_{em}$ est modélisé par une courbe purement mathématique comme une gaussienne. En particulier, le modèle semi-physique est plus précis pour les longueurs d'onde du spectre de luminescence $\phi_{em}$ éloignées de la longueur d'onde de pic $\lambda_P$. Ceci permet notamment, de façon avantageuse, que la bande passante d'au moins l'un moins des filtres optiques F1, F2, F3 recouvre une zone éloignée du sommet du pic de luminescence. Cela permet d'élargir la zone spectrale d'analyse pour un même ensemble de filtres optiques sans perdre en précision.

En outre, la longueur d'onde de coupure $\lambda_g$ fournit la bande interdite photovoltaïque (appelé également gap photovoltaïque) du matériau semi-conducteur émettant le rayonnement de luminescence. Une définition du gap photovoltaïque se trouve notamment dans la publication Rau et al. (Uwe Rau, Beatrix Blank, Thomas C. M. Müller, Thomas Kirchartz, Phys. Rev. Appl. 2017, 7, 044016) intitulée "Efficiency Potential of Photovoltaic Materials and Devices Unveiled by Detailed-Balance Analysis". La longueur d'onde de pic $\lambda_P$ fournit la bande interdite optique (également gap optique). Une mesure basée sur l'absorption optique fournit également le gap optique. Même si les valeurs du gap photovoltaïque et du gap optique sont proches, le gap photovoltaïque inclut des effets dus à l'ensemble de la jonction alors que le gap optique caractérise plus strictement le matériau semi-conducteur absorbeur. Le gap photovoltaïque inclut davantage d'effets liés aux charges et à la température. Le gap photovoltaïque est aussi lié à la géométrie de l'échantillon, notamment son épaisseur. De façon avantageuse, la comparaison du gap optique et du gap photovoltaïque peut aider à distinguer les influences intrinsèques et extrinsèques du comportement de la cellule photovoltaïque 20.

L'utilisation de filtres optiques passe bande permet, de façon avantageuse, de mettre en oeuvre le procédé d'imagerie spectrale à des structures multi-jonction, avec des ensembles de trois filtres définis pour l'étude de chaque jonction de sorte qu'ils excluent la luminescence des autres jonctions. Cette application aux structures multi-jonctions n'est pas possible en utilisant seulement des filtres passe-haut et passe-bas car la luminescence filtrée inclut alors d'autres pics de luminescence, ce qui rend inexacte la comparaison au modèle de luminescence, qu'il soit mathématique ou semi-physique.

Le procédé d'imagerie spectrale permet de façon avantageuse d'atteindre une grande sensibilité de mesure par rapport aux méthodes spectroscopiques car les bandes spectrales mesurées au travers des filtres optiques F1, F2, F3 sont plus larges et donc plus lumineuses que celles utilisées dans le cas de méthodes spectroscopiques.

De façon avantageuse, la mise en oeuvre du procédé d'imagerie spectrale ne nécessite pas une haute qualité de filtration des filtres optiques F1, F2, F3. Selon un mode de réalisation, une densité optique de 2 ou plus est suffisante. Ce type de filtre optique est peu onéreux et est accessible parmi les technologies disponibles. Toutefois, lorsque la cellule photovoltaïque 20 est une cellule multi-jonction, il peut alors être nécessaire de traiter les émissions parasites par ailleurs, notamment en ajoutant un filtre optique. Par exemple, pour une cellule photovoltaïque du type cellule tandem pérovskite sur silicium, on peut ajouter un filtre optique passe-bas dont la borne supérieure est égale à 900 nm en série sur le chemin optique, ce filtre bloquant le rayonnement émis par la jonction silicium et ne laissant passer que le rayonnement émis par la jonction pérovskite. De la même façon, on peut ajouter un filtre optique filtre optique passe-haut dont la borne supérieure est égale à 650 nm en série sur le chemin optique, ce filtre bloquant le rayonnement émis par la jonction pérovskite et ne laissant passer que le rayonnement émis par la jonction silicium. Les filtres optiques F1, F2, F3 peuvent alors être de qualité médiocre sans que ça ne pose de problème au procédé d'imagerie spectrale.

Le procédé d'imagerie spectrale exploite chaque pixel du capteur d'images 12. La résolution du procédé d'imagerie spectrale peut donc se compter en mégapixels. Le procédé d'imagerie spectrale s'applique parfaitement à la fois en champ large ou en champ proche (via une optique de type microscope). Un pixel représente alors une surface largement plus petite. Ce n'est pas le cas des systèmes d'imagerie spectrale basés sur un balayage par déplacement physique du matériau ou du système d'observation.

Le procédé d'imagerie spectrale s'applique à la fois en photoluminescence et en électroluminescence. Cette souplesse d'utilisation permet de répondre à davantage de cas d'applications car les contraintes des utilisateurs créent des cas de figure donnant tantôt l'avantage à l'une ou à l'autre de ces deux techniques.

Pour certains matériaux semi-conducteurs, la luminescence peut évoluer dans le temps, de manière réversible ou non. Ceci peut être le cas notamment pour les matériaux pérovskites.

La figure 11 est un schéma-bloc illustrant un autre mode de réalisation d'un procédé d'imagerie spectrale d'une cellule photovoltaïque 20 mettant en oeuvre le système d'imagerie spectrale 5 de la figure 1 ou 2 et permettant de prendre en compte la variation de luminescence de la cellule photovoltaïque 20 dans le temps.

Le mode de réalisation du procédé d'imagerie spectrale illustré en figure 11 comprend l'ensemble des étapes du mode de réalisation du procédé d'imagerie spectrale illustré en figure 9 et comprend, en outre, une étape supplémentaire 53' entre les étapes 53 et 54 décrites précédemment. En outre, les instants d'acquisition des images ImF1, ImF2, et ImF3 sont déterminés. A titre d'exemple, les acquisitions des images ImF1, ImF2, et ImF3 sont horodatées.

A l'étape 53', le troisième filtre optique F3 est retiré et le premier filtre optique F1 est à nouveau disposé entre la cellule photovoltaïque 20 et le capteur d'images 12. La cellule photovoltaïque 20 est illuminée par le rayonnement $L_{lum}$ pour le système d'imagerie spectrale 5 de la figure 1 ou alimentée électriquement pour le système d'imagerie spectrale 5 de la figure 2 et une quatrième image Im4 de la cellule photovoltaïque 20 est acquise par le capteur d'images 12 au travers du premier filtre optique F1. L'instant d'acquisition de l'image ImF4 est déterminé. A titre d'exemple, l'acquisition de l'image ImF4 est horodatée. L'image ImF4 acquise est transmise au dispositif de traitement 15 et stockée dans la mémoire 16. Le procédé comprend en outre une étape d'acquisition d'une image ImF4' de la cellule photovoltaïque 20 par le capteur d'images 12 avec interposition du premier filtre optique F1 en l'absence de luminescence. L'image ImF4' acquise est transmise au dispositif de traitement 15 et stockée dans la mémoire 16. Le dispositif de traitement 15 détermine une nouvelle image ImF4" égale à la différence entre l'image ImF4 et l'image ImF4'. Ceci permet de façon avantageuse de soustraire au moins une partie du bruit de mesure de l'image ImF4. A titre de variante, le dispositif de traitement 15 détermine la nouvelle image ImF4" égale à la différence entre l'image ImF4 et l'image ImF1' déterminée à l'étape 51.

Selon un mode de réalisation, le dispositif de traitement 15 détermine une fonction d'interpolation qui interpole l'évolution de la luminescence de la cellule photovoltaïque 20, pixel d'image par pixel d'image, en fonction du temps. Le dispositif de traitement 15 utilise la fonction d'interpolation ainsi déterminée pour modifier chaque pixel d'image de l'image ImF2" et chaque pixel d'image de l'image ImF3", de façon que les images ImF2" et ImF3" soient théoriquement celles qui auraient été obtenues si les images ImF1, ImF2, et ImF3 avaient été acquises au même instant.

A titre de variante, dans le cas où le système d'imagerie spectrale 5 de la figure 1 est utilisé, la tension aux bornes de la cellule photovoltaïque 20 est mesurée au moment de l'acquisition de chaque image ImF1, ImF2, ImF3 et ImF4. Le dispositif de traitement 15 détermine une fonction d'interpolation qui interpole l'évolution de la luminescence de la cellule photovoltaïque 20, pixel d'image par pixel d'image, en fonction de la tension aux bornes de la cellule photovoltaïque. Le dispositif de traitement 15 utilise la fonction d'interpolation ainsi déterminée pour modifier chaque pixel d'image de l'image ImF2" et chaque pixel d'image de l'image ImF3", de façon que les images ImF2" et ImF3" soient celles qui auraient été obtenues si les images ImF1, ImF2, et ImF3 avaient été acquises avec une même tension aux bornes de la cellule photovoltaïque 20.

Des essais ont été réalisés sur des première, deuxième, et troisième cellules photovoltaïques du type cellule tandem pérovskite sur silicium. Pour ces essais, les première, deuxième, et troisième cellules photovoltaïques ont été illuminées par un rayonnement émis par un ensemble de diodes électroluminescentes dont le rayonnement a un spectre centré à 520 nm. Pour la première cellule photovoltaïque, le procédé d'imagerie spectrale selon les modes de réalisation décrits précédemment en relation avec la figure 9 et avec la figure 11 ont été mis en oeuvre. Pour les deuxième et troisième cellules photovoltaïques, le procédé d'imagerie spectrale selon le mode de réalisation décrit précédemment en relation avec la figure 11 a été mis en oeuvre. Pour les essais, les premier, deuxième, et troisième filtres optiques F1, F2, F3 sont des filtres optiques passe-bande ayant une bande passante égale à 50 nm. Le premier filtre optique passe-bande F1 est centré sur 750 nm. Le deuxième filtre optique passe-bande F2 est centré sur 775 nm. Le troisième filtre optique passe-bande F3 est centré sur 800 nm.

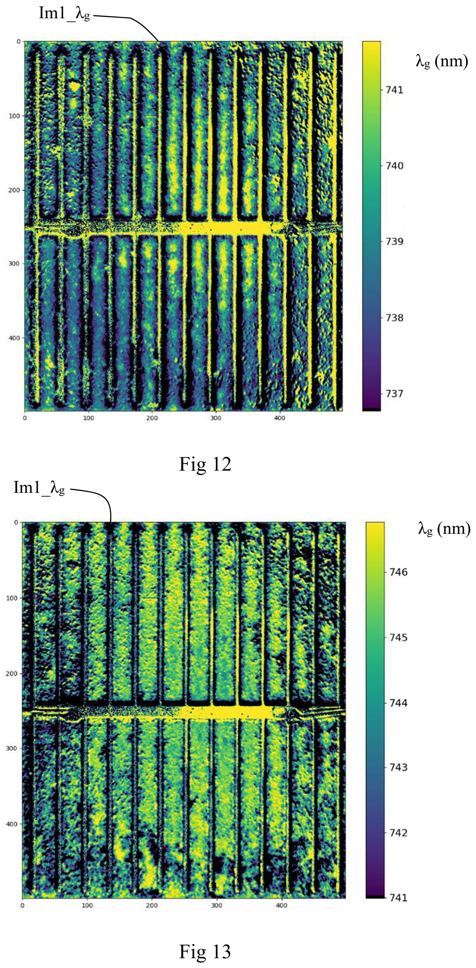

La figure 12 représente une image $Im1\_\lambda_g$ de la longueur d'onde de coupure de la première cellule photovoltaïque obtenue lors de la mise en oeuvre du mode de réalisation du procédé d'image spectrale décrit précédemment en relation avec la figure 9, c'est-à-dire sans étape de correction pour tenir compte de la variation temporelle de la luminescence, et la figure 13 représente la même image $Im1\_\lambda_g$ obtenue lors de la mise en oeuvre du mode de réalisation du procédé d'image spectrale décrit précédemment en relation avec la figure 11, c'est-à-dire avec l'étape 53' de correction pour tenir compte de la variation temporelle de la luminescence. La figure 12 met en évidence la modification de l'image $Im1\_\lambda_g$ de la longueur d'onde de coupure lorsque la variation temporelle de la luminescence est prise en compte.

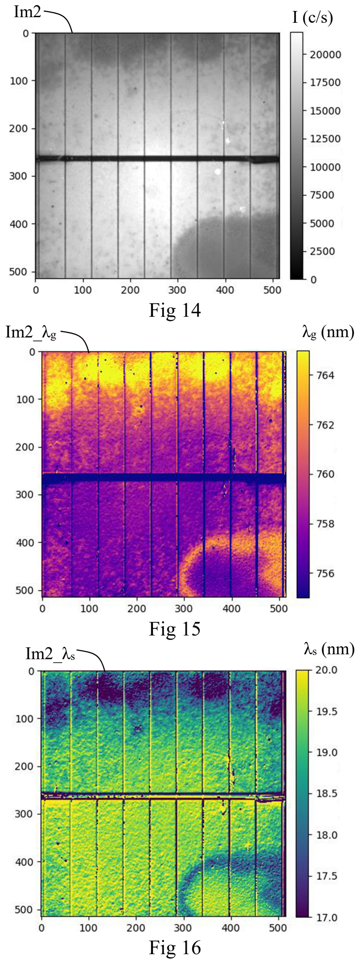

La figure 14, la figure 15, et la figure 16 représentent respectivement une image Im2 de luminescence de la cellule pérovskite de la deuxième cellule photovoltaïque 20 obtenue avec le premier filtre optique F1, une image $Im2\_\lambda_g$ de la longueur d'onde de coupure de la deuxième cellule photovoltaïque 20, et une image $Im2\_\lambda_s$ de la largeur de bande de la deuxième cellule photovoltaïque 20.

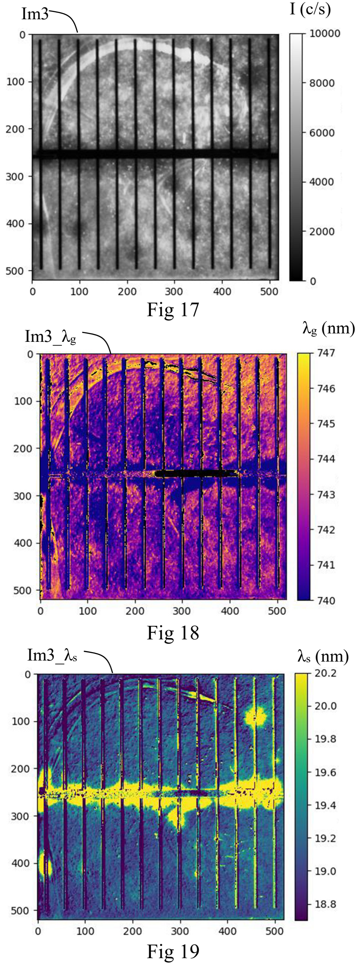

La figure 17, la figure 18, et la figure 19 représentent respectivement une image Im3 de luminescence de la troisième cellule photovoltaïque obtenue avec le premier filtre optique F1, une image $Im3\_\lambda_g$ de la longueur d'onde de coupure de la troisième cellule photovoltaïque, et une image $Im3\_\lambda_s$ de la largeur de bande de la troisième cellule photovoltaïque.

La comparaison des images en photoluminescence classique (Im2, Im3) et des images de la longueur d'onde de coupure et de la largeur de bande ($Im2\_\lambda_g$, $Im3\_\lambda_g$, $Im2\_\lambda_s$, $Im3\_\lambda_s$) permet d'affiner le diagnostic des défauts d'un matériau semi-conducteur luminescent.

A titre d'exemple, pour la deuxième cellule photovoltaïque, la zone dans le coin en bas à droite paraît plus sombre en photoluminescence classique (image Im2), alors que l'analyse spectrale montre que seul sa bordure semble affectée par un glissement vers une longueur d'onde de coupure $\lambda_g$ plus élevée (image $Im2\_\lambda_g$) tout en ayant un pic de luminescence plus étroit (image $Im2\_\lambda_s$), ce qui traduit une moindre quantité de défauts que ne le laisserait supposer l'image Im2. Au contraire, la zone proche du bord supérieur apparaît également plus sombre en photoluminescence classique (image Im2), mais l'imagerie spectrale conclut ici à un déplacement de la longueur d'onde de coupure $\lambda_g$ sur toute la surface (image Im2_$\lambda_g$). Deux zones semblables sur l'image Im2 sont donc interprétées différemment grâce à l'imagerie spectrale réalisée par le procédé d'imagerie spectrale selon l'invention.

A titre d'exemple, pour la troisième cellule photovoltaïque, certaines zones sombres en photoluminescence (image Im3) n'apparaissent quasiment pas sur l'image spectrale de la longueur d'onde de coupure $\lambda_g$ (image Im3_$\lambda_g$), notamment les ronds autour des arêtes verticales de la métallisation, ce qui permet d'établir qu'ici la baisse de luminescence n'est pas due à un problème intrinsèque du matériau semi-conducteur de la sous-cellule étudiée de la cellule tandem. Cependant, deux ronds sombres de ce type font exception car ils sont tous deux l'objet d'un élargissement du pic de luminescence (image Im3_$\lambda_s$), c'est-à-dire une augmentation des défauts dans le matériau semi-conducteur. Pourtant, seul l'un d'eux présente un glissement de la longueur d'onde de coupure $\lambda_g$ (image Im3_$\lambda_g$), en l'occurrence vers les plus faibles longueurs d'onde. Ici encore, les images Im3_$\lambda_g$ et Im3_$\lambda_s$ permettent de distinguer des phénomènes indépendants de la pérovskite (rond n'apparaissant pas en spectral) de phénomènes liés à la pérovskite. Ces derniers se distinguent en deux types : le glissement de la longueur d'onde de coupure $\lambda_g$ et l'élargissement du pic de luminescence, que l'on peut interpréter respectivement comme une modification du cristal et comme une augmentation de la densité de défauts électroniques.

De manière générale, dans une cellule multi-jonction, le procédé d'imagerie spectrale est mis en oeuvre pour analyser l'une des jonctions de la cellule. Un défaut d'une autre jonction que la jonction analysée peut impacter la luminescence de la jonction analysée, en particulier lorsque la luminescence de la jonction analysée est obtenue par électroluminescence. Le procédé d'imagerie spectrale permet de distinguer des phénomènes indépendants de la jonction analysée de phénomènes liés à la jonction analysée.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

**1.** Procédé d'imagerie spectrale d'un objet (20) luminescent mettant en oeuvre un capteur d'images (12) et des premier, deuxième, et troisième filtres optiques (F1, F2, F3), au moins l'un des premier, deuxième, et troisième filtres optiques (F1, F2, F3) étant un filtre optique passe-bande, le procédé comprenant les étapes suivantes :

a) déterminer, par simulation en utilisant un modèle semi-physique du spectre $\phi_{em}$ du rayonnement de luminescence ($L_{lum}$) émis par l'objet (20), des premières valeurs de luminescence simulées du rayonnement de luminescence ($L_{lum}$) émis par l'objet (20) au travers du premier filtre optique (F1) sur une première plage d'une longueur d'onde de coupure $\lambda_g$ de l'objet (20), des deuxièmes valeurs de luminescence simulées du rayonnement de luminescence ($L_{lum}$) émis par l'objet (20) au travers du deuxième filtre optique (F2) sur la première plage de la longueur d'onde de coupure $\lambda_g$, et des troisièmes valeurs de luminescence simulées du rayonnement de luminescence ($L_{lum}$) émis par l'objet (20) au travers du troisième filtre optique (F3) sur la première plage de la longueur d'onde de coupure $\lambda_g$, un premier tableau contenant des premières valeurs de ratio simulées égales aux rapports des premières valeurs de luminescence simulées et des deuxièmes valeurs de luminescence simulées, et un deuxième tableau contenant des deuxièmes valeurs de ratio simulées égales aux rapports des premières valeurs de luminescence simulées et des troisièmes valeurs de luminescence simulées ;
b) acquérir, par le capteur d'images (12), une première image de luminescence du rayonnement de luminescence ($L_{lum}$) émis par l'objet (20) au travers du premier filtre optique (F1) ;
c) acquérir, par le capteur d'images (12), une deuxième image de luminescence du rayonnement de luminescence ($L_{lum}$) émis par l'objet (20) au travers du deuxième filtre optique (F2) ;
d) acquérir, par le capteur d'images (12), une troisième image de luminescence du rayonnement de luminescence ($L_{lum}$) émis par l'objet (20) au travers du troisième filtre optique (F3) ;
e) déterminer une première image de ratio égale au rapport de la première image de luminescence et de la deuxième image de luminescence et une deuxième image de ratio égale au rapport de la première image de luminescence et de la troisième image de luminescence ; et
f) déterminer une image de la longueur d'onde de coupure $\lambda_g$ par comparaison de la première image de ratio et du premier tableau et de la deuxième image de ratio et du deuxième tableau.

**2.** Procédé d'imagerie spectrale selon la revendication 1, dans lequel le modèle semi-physique du spectre $\phi_{em}$ du rayonnement de luminescence ($L_{lum}$) émis par l'objet (20) est selon la relation suivante :

[Math 15]

$$\phi_{em}(\lambda) = EQE_{PV}(\lambda)\,\phi_{bb}(\lambda)\,B$$

où $\lambda$ est la longueur d'onde, $EQE_{PV}$ est l'efficacité quantique externe photovoltaïque de l'objet (20), $\phi_{bb}$ est l'émission du corps noir, et B est un premier facteur multiplicatif, l'efficacité quantique externe photovoltaïque $EQE_{PV}$ étant fonction de la largeur de bande $\lambda_s$.

3. Procédé d'imagerie spectrale selon la revendication 2, dans lequel l'efficacité quantique externe photovoltaïque $EQE_{PV}$ de l'objet (20) est modélisée par la relation suivante :

[Math 16]

$$EQE_{PV}(\lambda) = \frac{A_m}{1 + \exp(K(\lambda - \lambda_g)/\lambda_s)}$$

où $A_m$ est une constante et K est un deuxième facteur multiplicatif.

4. Procédé d'imagerie spectrale selon la revendication 2 ou 3, dans lequel, à l'étape a), les premières valeurs de luminescence simulées sont en outre déterminées sur une deuxième plage de la largeur de bande $\lambda_s$, les deuxièmes valeurs de luminescence simulées sont en outre déterminées sur une deuxième plage de la largeur de bande $\lambda_s$, et les troisièmes valeurs de luminescence simulées sont en outre déterminées sur une deuxième plage de la largeur de bande $\lambda_s$, le procédé comprenant en outre la détermination d'une image de la largeur de bande $\lambda_s$ par comparaison de la première image de ratio et du premier tableau et de la deuxième image de ratio et du deuxième tableau.

5. Procédé d'imagerie spectrale selon l'une quelconque des revendications 2 à 4, dans lequel le spectre du rayonnement SP capté par le capteur d'images (12) est modélisé selon la relation suivante :

[Math 17]

$$SP(\lambda) = \phi_{em}(\lambda)\,QE_{cam}(\lambda)\,FT_{opt}(\lambda)$$

où $QE_{cam}$ est la réponse spectrale du capteur d'images (12) et d'éventuels éléments optiques autres que les premier, deuxième, et troisième filtres optiques (F1, F2, F3), $FT_{opt}$ est la fonction de transfert de l'un des premier, deuxième, et troisième filtres optiques (F1, F2, F3).

6. Procédé d'imagerie spectrale selon l'une quelconque des revendications 2 à 5, dans lequel l'émission du corps noir $\phi_{bb}$ est modélisée par la relation suivante :

[Math 18]

$$\phi_{bb}(\lambda) = \frac{2hc^2}{\lambda^5}\frac{1}{\exp\left(\frac{hc}{\lambda kT}\right) - 1}$$

où h est la constante de Planck, c la vitesse de la lumière, et T est la température absolue.

7. Procédé d'imagerie spectrale selon l'une quelconque des revendications 1 à 6, comprenant en outre, après l'étape d) et avant l'étape e), une étape d'acquisition, par le capteur d'images (12), d'une quatrième image de luminescence du rayonnement de luminescence ($L_{lum}$) émis par l'objet (20) au travers du premier filtre optique (F1) et la modification de la deuxième image de luminescence et de la troisième image de luminescence par une interpolation déterminée à partir de la première image de luminescence et de la quatrième image de luminescence.

8. Procédé d'imagerie spectrale selon l'une quelconque des revendications 1 à 7, dans lequel au moins deux des premier, deuxième, et troisième filtres optiques (F1, F2, F3) sont des filtres optiques passe-bande.

9. Procédé d'imagerie spectrale selon la revendication 8, dans lequel chacun des premier, deuxième, et troisième filtres optiques (F1, F2, F3) est un filtre optique passe-bande.

10. Procédé d'imagerie spectrale selon l'une quelconque des revendications 1 à 9, comprenant, entre l'étape b) et l'étape c), le remplacement automatique du premier filtre optique (F1) par le deuxième filtre optique (F2), et comprenant, entre l'étape c) et l'étape d), le remplacement automatique du deuxième filtre optique (F2) par le troisième filtre optique (F3).

11. Procédé d'imagerie spectrale selon l'une quelconque des revendications 1 à 10, comprenant l'illumination de l'objet (20), l'objet (20) émettant le rayonnement de luminescence ($L_{lum}$) par photoluminescence.

12. Procédé d'imagerie spectrale selon l'une quelconque des revendications 1 à 11, comprenant l'alimentation électrique de l'objet (20), l'objet (20) émettant le rayonnement de luminescence ($L_{lum}$) par électroluminescence.

13. Procédé d'imagerie spectrale selon l'une quelconque des revendications 1 à 12, dans lequel l'objet (20) comprend une cellule photovoltaïque.

14. Procédé d'imagerie spectrale selon la revendication 13, dans lequel l'objet (20) comprend une cellule photovoltaïque de type tandem pérovskite sur silicium.

15

16

5

F2    F3

12

13

$L_{lum\_fil}$

15    F1    11

$L_{lum}$

$L_{ill}$

20

10

Fig 1

15

16

5

F2    F3

12

13

$L_{lum\_fil}$

15    F1

$L_{lum}$

17

20

10

Fig 2

Fig 3

Fig 4

SP
(au)

Fig 5

SP1
(au)

Fig 6

SP2
(au)

Fig 7

Fig 8

Fig 9

Fig 10

Fig 11

Fig 12

Fig 13

Im2

I (c/s)

Fig 14

Im2_$\lambda_g$

$\lambda_g$ (nm)

Fig 15

Im2_$\lambda_s$

$\lambda_s$ (nm)

Fig 16

Fig 17

Fig 18

Fig 19

| | Europäisches Patentamt European Patent Office Office européen des brevets | **RAPPORT DE RECHERCHE EUROPEENNE** | Numéro de la demande<br>EP 25 22 1330 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NGUYEN HIEU T ET AL: "Extracting optical bandgaps from luminescence images of perovskite solar cells", 2019 IEEE 46TH PHOTOVOLTAIC SPECIALISTS CONFERENCE (PVSC), IEEE, 16 juin 2019 (2019-06-16), pages 630-633, XP033706679, DOI: 10.1109/PVSC40753.2019.8981346 | 1-6,8-14 | INV.<br>G01N21/64<br>G01N21/66<br><br>ADD.<br>G01N21/84 |
| A | * le document en entier *<br>----- | 7 | |
| A | FRANCILLINA SCHÖNBERGER, STEFFEN LUTZ, THOMAS OTT, THOMAS WALTER, RAYMUND SCHÄFFLER: "SPECTRAL LUMINESCENCE IMAGING FOR Cu(In,Ga)Se2 THIN FILM MODULES", PROCEEDINGS / EU PVSEC 2013, 28TH EUROPEAN PHOTOVOLTAIC SOLAR ENERGY CONFERENCE AND EXHIBITION, PARC DES EXPOSITIONS PARIS NORD VILLEPINTE, PARIS, FRANCE, CONFERENCE 30 SEPTEMBER - 04 OCTOBER 2013, EXHIBITION 1- 3 OCTOBER 2013 : THE MOST INSPIRING PL, 16 décembre 2013 (2013-12-16), XP040635572, ISBN: 978-3-936338-33-1 * le document en entier *<br>----- | 1-14 | |

| | | DOMAINES TECHNIQUES RECHERCHES (IPC) |
|---|---|---|
| | | G01N |

Le présent rapport a été établi pour toutes les revendications

| Lieu de la recherche | Date d'achèvement de la recherche | Examinateur |
|---|---|---|
| La Haye | 7 avril 2026 | van Lith, Joris |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................

& : membre de la même famille, document correspondant

EPO FORM 1503 03.82 (P04C02)

# EP 4 764 456 A1

## RÉFÉRENCES CITÉES DANS LA DESCRIPTION

**Littérature non-brevet citée dans la description**

- **UWE RAU** ; **BEATRIX BLANK** ; **THOMAS C. M. MÜLLER** ; **THOMAS KIRCHARTZ**. Efficiency Potential of Photovoltaic Materials and Devices Unveiled by Detailed-Balance Analysis. *Phys. Rev. Appl.*, 2017, vol. 7, 044016